# EUROPEAN PATENT SPECIFICATION

(11) **EP 1 577 617 B1**
(45) Date of publication and mention of the grant of the patent: **14.11.2007**
(21) Application number: 05100883.7
(22) Date of filing: 09.02.2005
(51) Int. Cl.: F24F 6/14

(54) **Liquid vaporization system**
Verdampfungssystem für eine Flüssigkeit
Système de vaporisation d'un liquide

(30) Priority: 02.03.2004 IT MI20040381
(43) Date of publication of application: 21.09.2005
(73) Proprietor: Mariani, Edgardo, 20149 Milano (IT)
(72) Inventor: Mariani, Edgardo, 20149 Milano (IT)
(74) Representative: Mittler, Enrico

(56) References cited:
- WO-A-02/18162
- US-A- 1 986 873
- US-A1- 2003 034 305
- US-A1- 2003 111 746
- US-B1- 6 237 896
- US-B1- 6 324 862
- US-B1- 6 367 278
- US-B1- 6 786 701

## Description

The present invention refers to a system for the vaporization of liquids, in particular for cooling and/or humidifying environments.

Systems for cooling and humidifying environments by vaporization of water are known. The water is brought to high pressure and supplied to the sprayers which vaporize the water.

Normally the use of such systems requires the dimensioning of the same based on the area of the environment to be conditioned and an installation that is not simple to implement.

US-A-2003111746, US-A-6237896 and WO-A-0218162 disclose liquid vaporization systems according to the preamble of claim 1.

In view of the state of the art herein described, scope of the present invention is to provide a system for the vaporization of liquids that has simple application and easy installation.

According to the present invention, such scope is attained by means of a liquid vaporization system as recited in claim 1.

Owing to the present invention it is possible to provide a liquid vaporization system with easy installation since not directly connected with the water network. The tank filled with the liquid can easily be carried (owing to the wheels) on site, possibly be connected with the power supply for the operation of the pump, and put in operation. In this way the system can be placed in any environment inside or outside and it can be moved easily. The tank is preferably filled with the liquid for an autonomy of half a day or even one day and more.

In addition, the number of nozzles can be variable owing to the opportune pressure/capacity control valve connected with the pump, which allows its wide variation and therefore the preventive dimensioning of the system based on the environment to be conditioned is not required. The control valve discharges the excess liquid in the container, therefore a pump thus made has low electric and water consumptions.

Favourably, when the liquid, which normally is water, is added and/or replaced by scents or for example by products such as solar protections, the system can also carry out other very interesting functions.

The characteristics and the advantages of the present invention will become evident from the following detailed description of an embodiment thereof, which is illustrated as a non limiting example in the enclosed drawings, in which:
Figure 1 shows liquid vaporization system which does not include all features of an example of the present invention;
Figure 2 shows an additional example of liquid vaporization system;
Figure 3 shows a scheme of a traditional pumping system;
Figure 4 shows a scheme of a pumping system according to the present invention;
Figure 5 shows a liquid vaporization system according to a variation of the present invention.

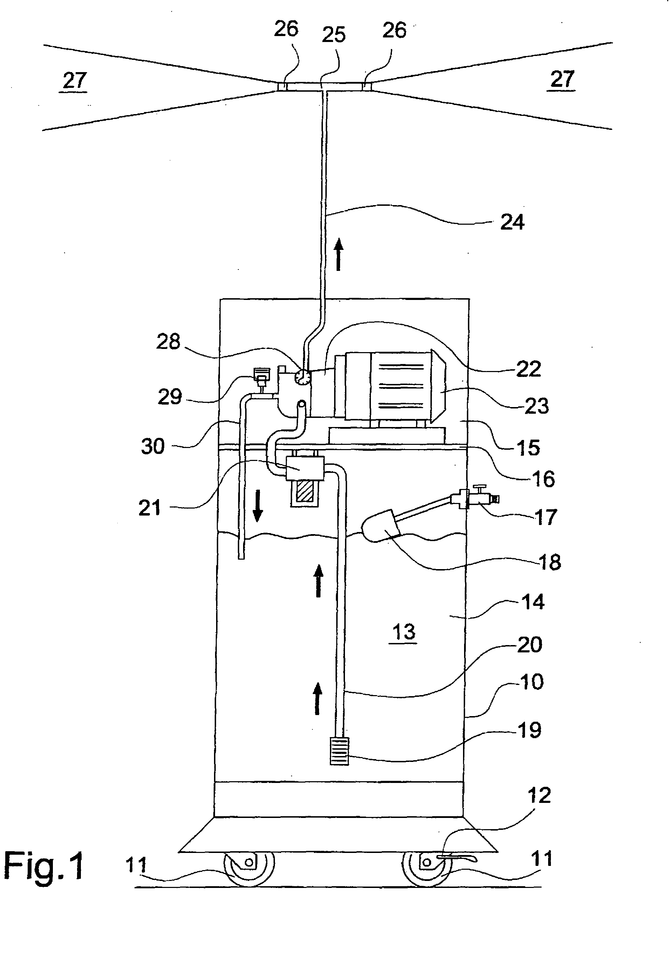

In figure 1 a container 10 is shown, with cylindrical, parallelepiped or other shape, provided with wheels 11 and relative stopping brakes 12.

The container 10 comprises a bottom area 13 destined to contain a liquid 14, and a top area 15 delimited by the bottom area 13 below, by an interstice 16.

Toward the top end of the bottom area 13 (just under the interstice 16) a valve 17 for the inlet of liquid 14 is placed, which is provided with float 18 for the closing of the same valve 17.

A bottom valve 19 is connected, through a tube 20, with a filter 21 and therefore with a pump 22, driven by a motor 23. The pump 22 and the motor 23 are arranged in the top area 15, and rest on the interstice 16.

A delivery pipe 24, which exits the container 10, connects the pump 22 with a distributor 25 and therefore with a plurality of nozzles 26. The nozzles 26 diffuse vaporised water 27 in the environment.

The pump 22 comprises a manometer 28 for the control of the pressure of output of the pump, and a governor of capacity 29 connected with a pipe 30 for the discharge of the excess liquid in the bottom area 13.

The bottom area 13 of the container 10 gets filled with liquid 14 through the head valve 17. Other systems for the charge of liquid 14 can be used.

For example, the valve 17 is connected with the water network for the charging, and once the bottom area 13 of the container 10 gets filled with liquid, it gets disconnected from the water network.

The dimensions of the bottom area 13 are to be determined based on the use that one wants to have. For example, if four nozzles 26 are used, capable to supply vaporised water at a flow of 1,5 l/h, and the system is to be used for 8 consecutive hours, the bottom area 13 must be capable to contain at least 48 1.

The liquid is taken from the bottom area 13, it passes in the tube 20, into the filter 21 and therefore it gets to the pump 22. This brings the liquid to high pressure and the delivery pipe 24 provides the high pressure liquid to the nozzles 26, which can be from 1 to multiple, connected with the tube 24 through the distributor 25, which comprises an inlet and a plurality of outlets to which the nozzles 26 get connected. Opportune tubes (shown) connected between the distributor 25 and the nozzles 26 allow the space distribution of the same nozzles 26, for a better distribution of the vaporised water 27 in the environment.

Based on the number of nozzles 26 present in the system and by controlling the manometer 28, the capacity/pressure through the governor of capacity 29 is typically set at a pressure of 70 bars, (which however also depends on the outlet hole of the nozzles 26). The excess liquid, in the pump 22, gets discharged by means of the discharge pipe 30 in the bottom area 13.

The liquid 14 used is preferably water but it can be any other liquid, and in particular it can be added with perfuming, disinfesting elements, disinfectants, sun protectants, etc according to the use one wants to have.

The peculiarity of the system is that, once charged with liquid, by temporarily connecting it to the water network, owing to the wheels 11 it can be carried in any environment without the need of any particular installation. It only needs a supply for the motor 23. The motor 23 is preferably supplied by power supply, but, given its low consumption, it can also be supplied by batteries with opportune capacity.

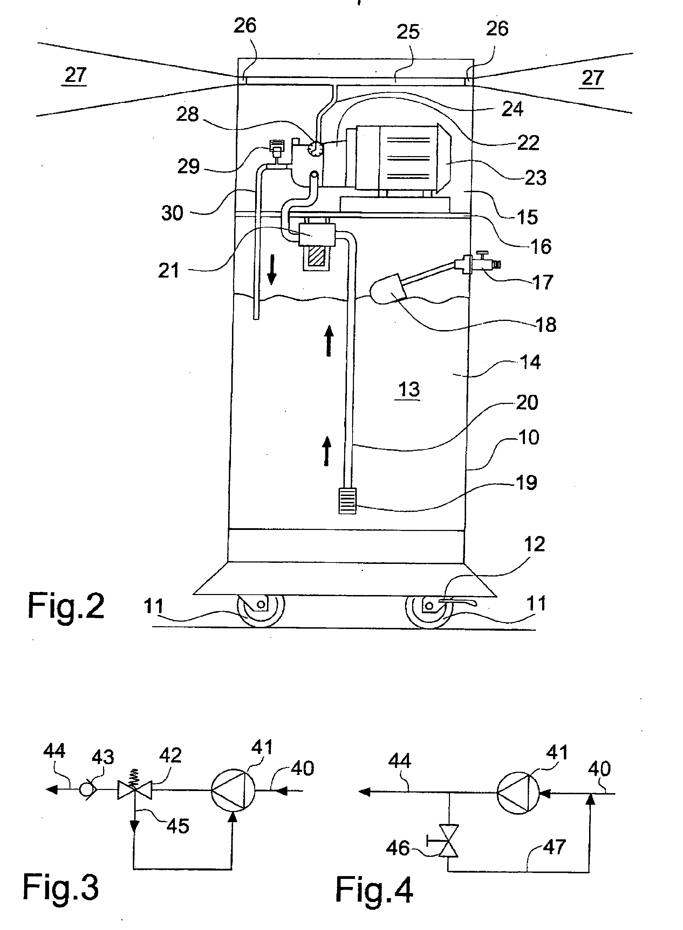

An alternative example of liquid vaporization sytem is the one shown in Figure 2 where the delivery pipe 24 does not come out of the container 10, as the distributor 25 and therefore the plurality of nozzles 26 is placed directly on the container 10 in its top area 15. The number of nozzles 26 and their arrangement are such so that the vaporised water 27 is directed towards one or more sides of the container 10. Possibly the portion of the container 10 where the nozzles 26 are located can have a smaller diameter than the diameter of the entire container.

The pump 22 is a pump with pistons preferably with high pressure having peculiarities as compared with traditional pumps.

In Figure 3 a scheme of a conventional pumping system is shown. A delivery pipe 40 takes liquid to the pump 41. At the outlet (in some pumps also inside) of the pump 41 a bypass valve 42 and therefore a non-backflow valve 43 is placed. The liquid in pressure is therefore supplied to the output tube 44. The liquid backflowing from the bypass valve 42 is made recirculate in the same pump 41 by means of a backflow tube 45.

This pumping system defines the outflow pressure by adjusting the bypass 42. The adjustment of the pressure, in this case, can take place in limited way. In addition, a quantity of liquid is made recirculate inside the pump with the consequence of a greater effort on behalf of the same and therefore of increase in temperature and a greater energy consumption.

According to the present invention a pumping system as the one shown in Figure 4 has favourably been used.

A delivery pipe 40 takes liquid to the pump 41. At the output of the pump 41, the liquid in pressure is supplied to the outlet tube 44. A valve for the regulation of the capacity 46 is placed on the backflow tube 47.

In this case the bypass valve 42 and the non-backflow valve 43 are not present.

The bypass is not necessary any more since the pressure/capacity of the liquid is now adjusted by the valve 46. The non-backflow valve 43 is not necessary any more since even if there were backflow liquid, it would pass in the backflow tube 47 and not in the pump 41.

The capacity regulation valve 46, comprises a micrometric governor which allows the adjustment of the flow of the recirculation water in the tube 47 and consequently the capacity/pressure in the outflow tube 44. The backflow liquid from the capacity regulation valve 46 is made recirculate, not in the pump 41, but outside the same pump 41, by means of the backflow tube 47.

In Figure 4 the tube 47 takes the liquid back in the tube 40, that is in the part of the circuit at low pressure.

With reference to Figures 1 and 2, the discharge pipe 30 discharges in the bottom area 13 of the container 10, the excess liquid.

This pumping system defines the outflow pressure by adjusting the capacity regulation valve 46, which by means of a micrometric adjustment makes a setting within a wide pressure/capacity interval possible. In addition, since there is no recirculation internal to the pump, the latter does not have the disadvantages of the traditional pumps and therefore, in spite of the wide pressure/capacity setting interval, it is possible to use a pump with smaller dimensions.

The container 10, which encloses both the liquid and the pumping system, in the embodiment above described, has cylindrical appearance with its height greater than its diameter. Containers 10 having other shapes are possible, as for example with parallelepiped shape with a base with length greater than its height. In this case the pumping system, beside the possibility to be placed on the interstice 16, above the liquid 14, can also be placed next to a container for the liquid.

According to a favourable embodiment of the present invention, if a forced ventilation system is combined with the nozzles 26 the outflowing vapourised jet is made faster and therefore capable to cover a greater distance. More in particular, particular advantages are obtained if a tube with opportune diameter and for example equal to approximately 0,5 cm is mechanically placed next to each nozzle 26, having the open end at the same level as the outflow hole of the nozzle 26, and compressed air is supplied to this tube for example with a pressure approximately comprised between 2 and 5 bars.

The compressed air can be generated by a pump placed next to the pump 22.

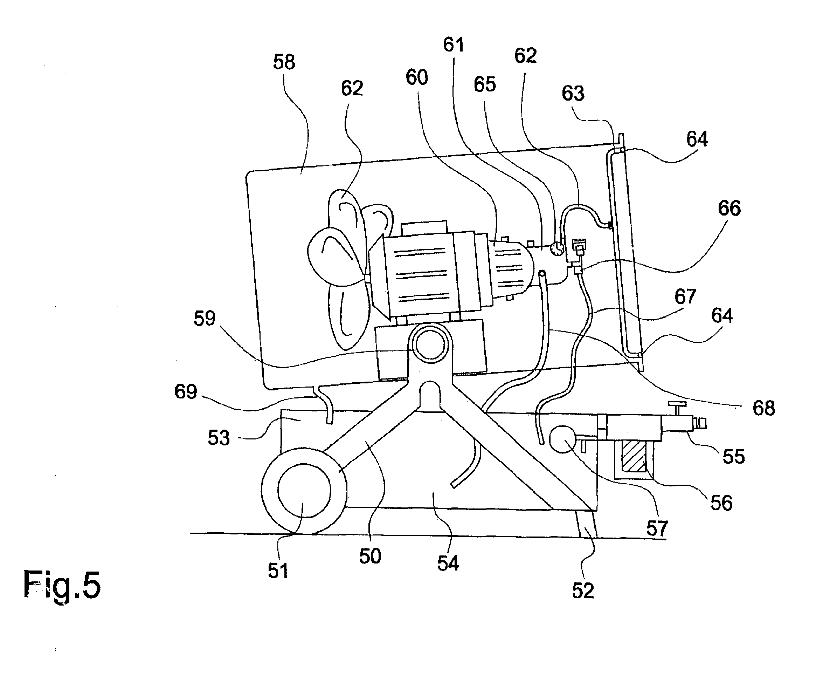

A liquid vaporization system according to the invention is the one rendered in Figure 5.

A transportable undercarriage 50 comprising two wheels 51 and two legs 52 supports a bottom structure 53, not strictly necessary, which contains liquid 54. On one side of the bottom structure 53 a valve 17 for the inflow of liquid 54 is placed, followed by a filter 56 and a float 57 comprehensive of a closing valve.

A top structure 58, is hinged on pins 59 of the bottom structure 53, on which it can rotate. The top structure 58 contains a motor 60, which drives a pump 61 and a fan 62. From the pump 61 a delivery pipe 62 for the liquid at high pressure exits. Such tube 62 is connected with a distributor 63 and therefore with a plurality of nozzles 64, which extend from the top structure according to a preset direction. The pump 61 also comprises a manometer 65, a flow adjuster 66 connected with a discharge pipe 67. The discharge pipe 67 discharges the excess liquid into the bottom structure 53. A tube for the intake 68 of the liquid gets liquid from the bottom structure 53 and it supplies it to the pump 61. A tube for the recovery 69 of the condensation or dripping liquid of the top structure 58 connects the same with the bottom structure 53.

The fan 62 is positioned so as to supply a flow of air according to the direction preset for the nozzles 64. The top structure 58, in proximity of the nozzles 64, has an open zone, in order to make so that the flow of air increases the speed of the flow of vapourised liquid outflowing from the nozzles 64.

The fan 62 is driven directly by the motor 60 and is located on its same axis, preferably upstream of the motor 60 and of the pump 61. A single motor 60 drives both the pump 61 and the fan 62.

Therefore, the fan 62, in addition to increasing the speed of the flow of liquid outflowing from the nozzles 24, allows the cooling of the motor 60.

## Claims

1. Liquid vaporization system comprising: means (53) for the accumulation of said liquid; at least one nozzle (64) for vaporization of said liquid; a pump (61) driven by a motor (60) to transfer said liquid from said accumulation means (53) to said at least one nozzle (64); wherein said accumulation means (53) contain a sufficient amount of liquid for the use of said vaporization system for a preset time and are connectable with the water network only in a liquid charging step, a fan (62) being provided to produce a flow of air directed to said at least one nozzle (64) to accelerate the liquid in outflow from said nozzle (64), said fan (62) being driven by said motor (60) and said motor being located on the same axis as said fan (62) between said fan (62) and said at least one nozzle (64) so that said flow of air causes cooling of said motor (60).

2. System according to claim 1 **characterised in that** said preset time is over 4 hours and more preferably is over 8 hours

3. System according to claim 1 **characterised in that** it comprises a single container to contain said accumulation means and said pump.

4. System according to claim 1 **characterised in that** said pump comprises a first portion of hydraulic circuit at a first pressure and a second portion of hydraulic circuit at a second pressure, said second pressure is greater than said first pressure; said pump comprises an adjustment element capable to adjust the pressure, by means of the controlled drainage of said liquid, said element for the adjustment of the pressure is placed in said second portion

5. System according to claim 2 **characterised in that** said adjustment element comprises a valve which allows the controlled drainage of said liquid from said second portion

6. System according to claim 1 **characterised in that** said pump does not comprise the non-backflow valve in outflow and it does not comprise the bypass valve

7. System according to claim 1 **characterised in that** said adjustment element capable to adjust the pressure, by means of the controlled drainage of said liquid, discharges said liquid in said accumulation means.

8. System according to claim 1 **characterised in that** said accumulation means is made up of a refillable tank.

9. System according to claim 2 **characterised in that** said container comprises wheels for its movement

10. System according to claim 1 **characterised in that** said liquid is water

11. System according to claim 1 **characterised in that** said liquid is sun protectant

## Patentansprüche

1. Verdampfungssystem für eine Flüssigkeit, umfassend: ein Mittel (53) zur Sammlung der Flüssigkeit; mindestens eine Düse (64) zum Verdampfen der Flüssigkeit; eine von einem Motor (60) angetriebene Pumpe (61) zum Überführen der Flüssigkeit aus dem Sammlungsmittel (53) zu der wenigstens einen Düse (64); wobei das Sammlungsmittel (53) eine ausreichende Menge der Flüssigkeit zum Gebrauch des Systems für eine vorgewählte Zeit und Verdampfung enthält und lediglich zur Flüssigkeitsbefüllung an das Wassernetz anschließbar ist; einen Ventilator (62), der dazu dient, einen auf die wenigstens eine Düse (64) gerichteten Luftstrom zu erzeugen, um den Flüssigkeitsausstoß aus der Düse (64) zu beschleunigen, wobei sich der vom Motor (60) angetriebene Ventilator (62) und der Motor (60) auf der gleichen Achse wie der Ventilator (62) befinden und zwar zwischen dem Ventilator (62) und der wenigstens einen Düse (64), so dass der Luftstrom eine Kühlung des Motors bewirkt.

2. System gemäß Anspruch 1, **dadurch gekennzeichnet, dass** die vorgewählte Zeit länger als 4 Stunden, vorteilhafter länger als 8 Stunden ist.

3. System gemäß Anspruch 1, **dadurch gekennzeichnet, dass** es ein einziges Gehäuse umfasst, um das Sammlungsmittel und die Pumpe aufzunehmen.

4. System gemäß Anspruch 1, **dadurch gekennzeichnet, dass** die Pumpe einen ersten Hydraulikkreislauf-Teilbereich mit einem ersten Druck und einen zweiten Hydraulikkreislauf-Teilbereich mit einem zweiten Druck aufweist, wobei der zweite Druck höher als der erste Druck ist; die Pumpe ein Regulierungselement aufweist, welches dazu dient, den Druck mittels kontrollierter Ableitung der Flüssigkeit zu regulieren, und das Element für die Regulierung des Drucks im zweiten Teilbereich angeordnet ist.

5. System gemäß Anspruch 2, **dadurch gekennzeichnet, dass** das Regulierungselement ein Ventil umfasst, welches die kontrollierte Ableitung der Flüssigkeit aus dem zweiten Teilbereich ermöglicht.

6. System gemäß Anspruch 1, **dadurch gekennzeichnet, dass** die Pumpe kein Rückschlagventil im Ausstoß und kein Bypass-Ventil umfasst.

7. System gemäß Anspruch 1, **dadurch gekennzeichnet, dass** das Regulierungselement, welches dazu dient, den Druck mittels kontrollierter Ableitung der Flüssigkeit zu regulieren, die Flüssigkeit in das Sammlungsmittel abfließen lässt.

8. System gemäß Anspruch 1, **dadurch gekennzeichnet, dass** das Sammlungsmittel aus einem wieder befüllbaren Behälter besteht.

9. System gemäß Anspruch 2, **dadurch gekennzeichnet, dass** das Gehäuse Räder zur eigenen Bewegung aufweist.

10. System gemäß Anspruch 1, **dadurch gekennzeichnet, dass** es sich bei der Flüssigkeit um Wasser handelt.

11. System gemäß Anspruch 1, **dadurch gekennzeichnet, dass** es sich bei der Flüssigkeit um Sonnenschutzmittel handelt.

## Revendications

1. Système de vaporisation de liquide comprenant : des moyens (53) pour l'accumulation dudit liquide ; au moins une buse (64) pour la vaporisation dudit liquide ; une pompe (61) entraînée par un moteur (60) pour transférer ledit liquide desdits moyens d'accumulation (53) à ladite au moins une buse (64) ; dans lequel lesdits moyens d'accumulation (53) contiennent une quantité de liquide suffisante pour l'utilisation dudit système de vaporisation pendant un temps prédéfini et peuvent être raccordés au réseau d'eau uniquement au cours d'une étape de chargement de liquide, un ventilateur (62) étant prévu pour produire un flux d'air dirigé vers ladite au moins une buse (61) pour accélérer le liquide dans le débit provenant de ladite buse (61), ledit ventilateur (62) étant entraîné par ledit moteur (60) et ledit moteur étant situé sur le même axe que ledit ventilateur (62) entre ledit ventilateur (62) et ladite au moins une buse (64) de sorte que ledit flux d'air provoque le refroidissement dudit moteur (60).

2. Système selon la revendication 1 **caractérisé en ce que** ledit temps prédéfini dépasse 4 heures et de manière préférée entre toutes dépasse 8 heures.

3. système selon la revendication 1 **caractérisé en ce qu'**il comprend un seul récipient pour contenir lesdits moyens d'accumulation et ladite pompe.

4. Système selon la revendication 1 **caractérisé en ce que** ladite pompe comprend une première partie d'un circuit hydraulique à une première pression et une seconde partie d'un circuit hydraulique à une seconde pression, ladite seconde pression est supérieure à ladite première pression ; ladite pompe comprend un élément de réglage capable de régler la pression, au moyen du drainage contrôlé dudit liquide, ledit élément pour le réglage de la pression est placé dans ladite seconde partie.

5. Système selon la revendication 2 **caractérisé en ce que** ledit élément de réglage comprend une soupape qui permet le drainage contrôlé dudit liquide depuis ladite seconde partie.

6. Système selon la revendication 1 **caractérisé en ce que** ladite pompe ne comprend pas la soupape de non-refoulement dans le débit et ne comprend pas la soupape de dérivation.

7. Système selon la revendication 1 **caractérisé en ce que** ledit élément de réglage capable de régler la pression, au moyen du drainage contrôlé dudit liquide, évacue ledit liquide dans lesdits moyens d'accumulation.

8. Système selon la revendication 1 **caractérisé en ce que** lesdits moyens d'accumulation sont composés d'un récipient rechargeable.

9. Système selon la revendication 2 **caractérisé en ce que** ledit récipient comprend des roues pour son déplacement.

10. Système selon la revendication 1 **caractérisé en ce que** ledit liquide est de l'eau.

11. Système selon la revendication 1 **caractérisé en ce que** ledit liquide est une crème solaire.
